# EUROPEAN PATENT SPECIFICATION

(11) **EP 1 053 633 B1**
(45) Date of publication and mention of the grant of the patent: **15.10.2003**
(21) Application number: 99901856.7
(22) Date of filing: 03.02.1999
(51) Int. Cl.: H04N 1/00, H04N 7/16, H04N 7/167

(54) **CONFIGURING METHOD AND DEVICE**
KONFIGURIERUNGSMETHODE UND -VORRICHTUNG
PROCEDE ET DISPOSITIF DE CONFIGURATION

(30) Priority: 04.02.1998 EP 98400240
(43) Date of publication of application: 22.11.2000
(73) Proprietor: Canal+ Technologies, 75015 Paris (FR)
(72) Inventor: MERIC, Jerome, F-60300 Senlis (FR); DECLERCK, Christophe, F-28210 Senantes (FR); LETOURNEUR, Patrice, F-92150 Suresnes (FR)
(74) Representative: Santarelli
(86) International application number: IB9900274
(87) International publication number: WO99040719

(56) References cited:
- EP-A- 0 562 295
- EP-A- 0 723 371
- US-A- 5 440 632
- "FUNCTIONAL MODEL OF A CONDITIONAL ACCESS SYSTEM" EBU REVIEW- TECHNICAL, no. 266, 21 December 1995, pages 64-77, XP000559450

## Description

The present invention relates to a device for use in a receiver/decoder, and in particular to a device for configuring components of a receiver/decoder in response to a change in a manipulation protocol or conditional access system used by the receiver/decoder. The invention also relates to a method of configuring a receiver/decoder to access data; the data may be in any suitable form, such as in the form of a computer programme or a television programme.

The present invention finds specific application in a broadcast digital television system in which received signals are passed through a receiver to a receiver/decoder and then to a television set. The term "receiver/decoder" used herein may connote a receiver for receiving either encoded or non-encoded signals, for example, television and/or radio signals. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser or a video recorder.

The receiver/decoder may decode a compressed MPEG-type signal into a television signal for the television set. It is controlled by a remote controller handset, through an interface in the receiver/decoder. The receiver/decoder is used to process the incoming bit stream, and includes a computer system including a variety of (usually computer software) application modules which cause the system to perform a variety of control and other functions. The term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4. In the context of the present patent application, the term includes all variants, modifications or developments of MPEG formats applicable to the field of digital data transmission.

A conditional access system enables an end user to access digital television broadcasts from one or more broadcast suppliers. In such a conditional access system, a Subscriber Authorization System (SAS) manages access rights to television programmes, available as commercial offers and sold according to different modes of commercialisation (subscription mode, pre-book mode, impulse mode). The SAS, according to those rights and to information received from a Subscriber Management System (SMS), generates using a message generator so-called "Entitlement Management Messages" (EMMs) which are broadcast by a message emitter via a multiplexer to the receiver/decoder of the subscriber to authorize him/her. An EMM may be designated to one subscriber or a group of subscribers. Entitlement Control Messages (ECMs) are messages sent in relation to scrambled programs. An ECM enables a user to descramble a control word to obtain the right to descramble a broadcast transmission, such as a television programme. During a broadcast transmission, the control word typically changes every few seconds, and so ECMs are also periodically transmitted to enable the changing control word to be descrambled.

A security module, such as a smartcard, capable of decrypting messages relating to commercial offers (that is, one or more television programmes sold by the broadcast supplier) is inserted in the receiver/decoder. Using the receiver/decoder and smartcard, the end user may purchase events.

It is expected that the receiver/decoder may be designed and manufactured by various different manufacturers. It may therefore have various different hardware designs, and may support one of a number of conditional access systems. Indeed, a receiver/decoder may support more than one conditional access system. In this case. the system used at any one time is sclected by the subscriber, who is required to insert the correct smartcard into the receiver/decoder in order to access the chosen conditional access system.

When the broadcasts are in the form of MPEG-type signals, the data is received in the form of data packets of typically 188 bytes within respective types of data stream, for example, video data streams, audio data streams and teletext data streams. Each packet is preceded by a Packet Identifier (PID) of 13 bits, one PID for every packet transported in the MPEG data stream. Data packets relating to applications, EMMs and ECMs typically comprise one or more MPEG sections.

Parameters of each conditional access system, such as the frequency of signals received from a transponder, the values of the PIDs, and any other information necessary to download, for example, an EMM, are stored in the memory of the receiver/decoder. This can result in a large memory requirement for the receiver/decoder, particularly if the receiver/decoder supports several different conditional access systems.

When one of these parameters is updated, or the conditional access system is changed, it is necessary to update the components of the receiver/decoder which perform manipulation of the received datastream to enable the end user to access, for example, a television programme broadcast in the datastream. Therefore, there may be many applications stored in the receiver/decoder which require access to components of the receiver/decoder, adding to the complexity of the receiver/decoder. Such applications may be required to store values of parameters used in the manipulation of the received datastream, which can add further to the memory requirement of the receiver/decoder.

The present invention seeks to solve this and other problems.

EP-A-0 562 295 describes a conditional access system in which several card readers are connected and controlled by a single processor. A special power supply unit is controlled by the processor to supply the card readers with appropriate voltages.

US-A-5 440 632 describes a reprogrammable subscriber terminal of a subscription television service which can have the control program code of its control processor modified by downloading new program code from the headend. The control processor stores a boot program in an internal read only memory. Upon start up and resets, the boot program determines whether the control program should be changed from a command sent from the headend. The command, termed a parameters transactions, includes the number of expected download program code transactions required to complete the control code modification, the memory space areas where the code is to be loaded, and the channel over which the download program code transactions are to be transmitted. The channel is tuned and when the boot program receives all the download program code transactions accurately and stores them, the boot program will cause the control program to be restarted at a selected address of the new or modified control program code which has been downloaded. The boot program may download code to different configurations of subscriber terminals including those with Flash EPROM or extended memories from plug-in expansion modules

The present invention provides a device for use in a receiver/decoder operable with different conditional access systems, the receiver/decoder including means for filtering data received by the receiver/decoder and which is configurable in dependence on a said conditional access system, and means for storing parameters associated with the filtering of said data for all of the different conditional access systems, the device comprising:
means for receiving a command instructing configuration of the filtering means in dependence on a particular one of said conditional access systems;
means for retrieving from the storage means a parameter associated with said particular one of the conditional access systems; and
means for outputting said parameter to the filtering means for use in configuring the filtering means, whereby the filtering means is not required to receive all parameters necessary for configuration thereof in dependence on all of the conditional access systems.

In one preferred embodiment, the filtering means is provided in the form of a demultiplexer and filter, in which case "manipulation" of the received data takes the form of filtering the received data. As used herein, the term "manipulation protocol" refers to the setting of the filter which enables only specific components of the received data to be extracted by the receiver/decoder, and the configuration of the protocol, or filter, is provided in the form of changing the filter to extract different components of the received datastream.

As the filtering means only receives a parameter related to one change of the manipulation protocol, the device (termed the "Conditional Access device") can provide an efficient means of configuring the manipulation protocol to enable data from different conditional access systems to be downloaded.

The Conditional Access device may be arranged to output the parameter to the filtering means upon receipt of a command instructing output of the parameter. As the parameter, which may be used, for example, in configuring the manipulation protocol for one conditional access system, is sent only after the receipt of this second command, the retrieval of the parameters from the storage means can occur whilst the manipulation protocol is configured for a different conditional access system, and therefore whilst the filtering means is filtering data associated with this conditional access system. This can enable configuration of the manipulation protocol to be conducted efficiently.

Preferably, the device is capable of receiving commands from a configuring application. The device may receive a command notifying the device of updating of the parameters stored in the storage means, which command may be output by the configuring application.

The parameters may include an identifier of the conditional access system currently being used by the receiver/decoder. This can enable parameters associated with the manipulation protocol to be stored in groups, each group being associated with a particular conditional access system. Thus, the outputting means may be arranged to output a parameter associated with the identifier of the conditional access system currently being used by the receiver/decoder. The device may be capable of changing an identifier of the conditional access system currently being used by the receiver/decoder in response to a command from the configuring application.

Each parameter may comprise at least one byte of a section of a data packet to be received by the receiver/decoder. Preferably each parameter comprises an identifier of a data packet to be received by the receiver/decoder. Thus, each parameter may comprise one or more of an identifer of an EMM and an identifier of an ECM.

The device may be arranged to receive commands from a plurality of applications for a plurality of parameters.

The present invention also provides a receiver/decoder including a device as aforesaid, said filtering means arranged to operate under the control of the device to filter data, and said means for storing parameters associated with the filtering of said data for all of the different conditional access systems

The present invention also extends to a method of configuring a receiver/decoder to access data, the receiver/decoder including means for filtering data received by the receiver/decoder and which is configurable in dependence on a said conditional access system, and means for storing parameters associated with the filtering of said data for all of the different conditional access systems, the method comprising the steps of:
receiving a command instructing configuration of the filtering means in dependence on a particular one of said conditional access systems;
retrieving from the storage means a parameter associated with said particular one of the conditional access systems; and
outputting said parameter to the filtering means for use in configuring the filtering means, whereby the filtering means is not required to receive all parameters necessary for configuration thereof in dependence on all of the conditional access systems.

Analogous method features to the device features described above are also provided.

Preferred features of the present invention will now be described, purely by way of example, with reference to the accompanying drawings, in which:-
Figure 1 shows the overall architecture of a digital television system according to the preferred embodiment of the present invention;
Figure 2 shows the architecture of a conditional access system of the digital television system;
Figure 3 shows the structure of an Entitlement Management Message used in the conditional access system;
Figure 4 shows in detail the structure of the EMM;
Figure 5 is a schematic diagram of a smartcard;
Figure 6 is a schematic diagram of an arrangement of zones in the memory of the smartcard;
Figure 7 is a schematic diagram of a PPV event description;
Figure 8 is a functional block diagram of the receiver/decoder;
Figure 9 is a schematic diagram of interfaces of the receiver/decoder;
Figure 10 shows certain components of the virtual machine and run time engine in more detail;
Figure 11 is a functional block diagram showing the arrangement of a Conditional Access device in a receiver/decoder; and
Figure 12 shows the architecture of a receiver system for downloading sections from an MPEG data stream:
Figure 13 shows steps in a method of configuring a demultiplexer and filter to download an EMM; and
Figure 14 shows steps in a method of configuring a demultiplexer and filter to download an ECM.

Details of a suitable digital interactive television system may be found in our co-pending applications PCT/EP97/02106 - 02117 to which reference should be made. For ease of reference, parts described in more detail in the aforementioned specifications are generally designated by the reference numerals used in those specifications.

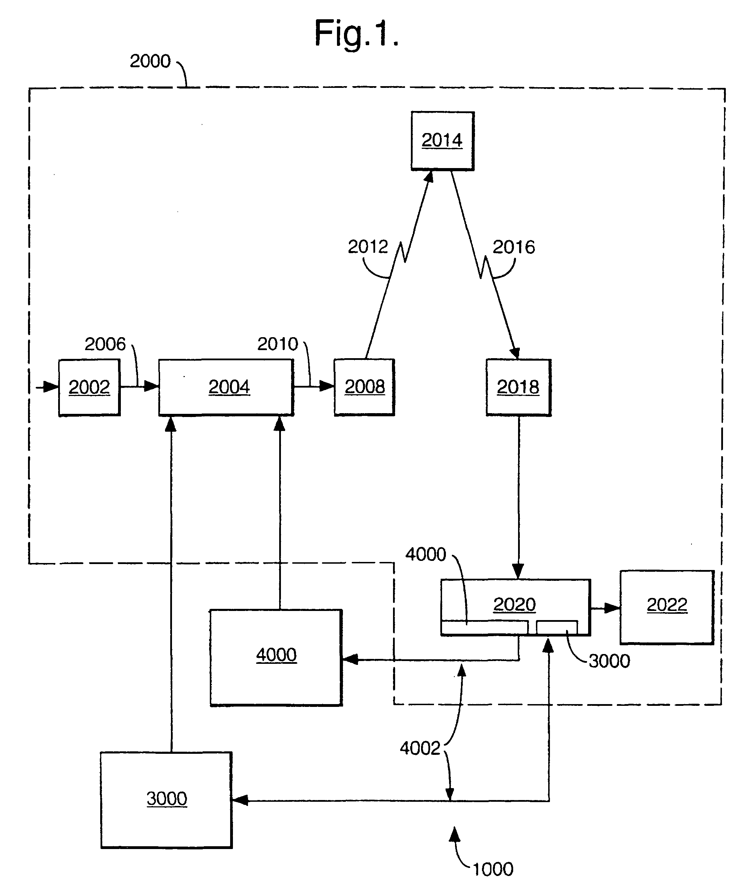

An overview of a digital television broadcast and reception system 1000 is shown in Figure 1. The invention includes a mostly conventional digital television system 2000 which uses the known MPEG-2 compression system to transmit compressed digital signals. In more detail, MPEG-2 compressor 2002 in a broadcast centre receives a digital signal stream (typically a stream of video signals). The compressor 2002 is connected to a multiplexer and scrambler 2004 by linkage 2006. The multiplexer 2004 receives a plurality of further input signals, assembles one or more transport streams and transmits compressed digital signals to a transmitter 2008 of the broadcast centre via linkage 2010, which can of course take a wide variety of forms including telecom links. The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television set 2022. The receiver decoder 2020 decodes the compressed MPEG-2 signal into a television signal for the television set 2022.

A conditional access system 3000 is connected to the multiplexer 2004 and the receiver decoder 2020, and is located partly in the broadcast centre and partly in the decoder. It enables the end user to access digital television broadcasts from one or more broadcast suppliers. A smartcard, capable of decrypting messages relating to commercial offers (that is, one or several television programmes sold by the broadcast supplier), can be inserted into the receiver/decoder 2020. Using the decoder 2020 and smartcard, the end user may purchase events in either a subscription mode or a pay-per-view mode.

An interactive system 4000, also connected to the multiplexer 2004 and the receiver/decoder 2020 and again located partly in the broadcast centre and partly in the decoder, enables the end user to interact with various applications via a modemmed back channel 4002.

The conditional access system 3000 is now described in more detail.

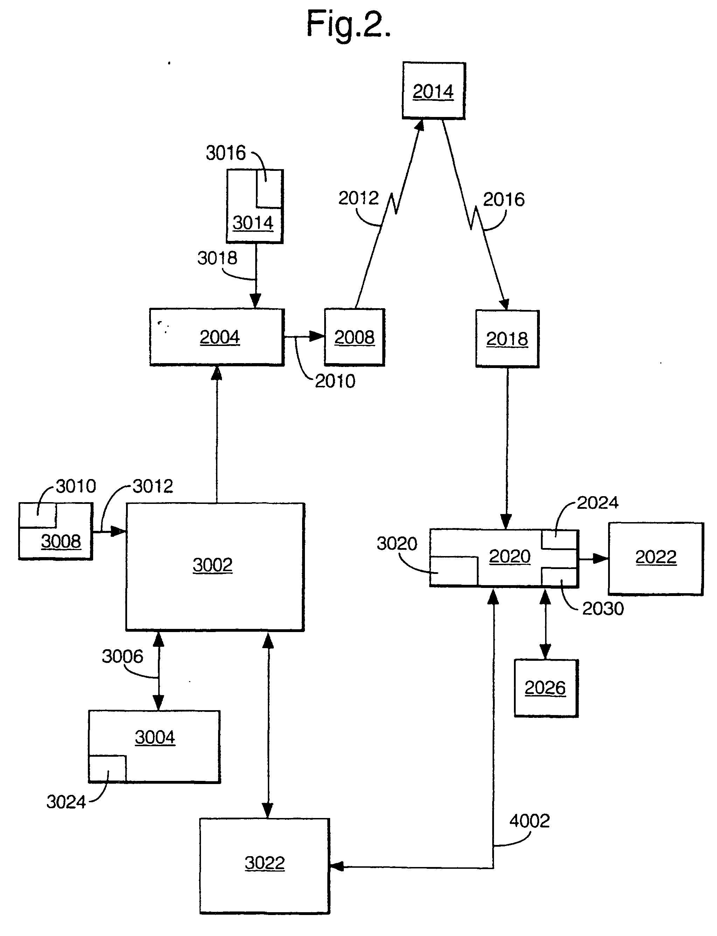

With reference to Figure 2, in overview the conditional access system 3000 includes a Subscriber Authorization System (SAS) 3002. The SAS 3002 is connected to one or more Subscriber Management Systems (SMS) 3004, one SMS for each broadcast supplier, by a respective TCP-IP linkage 3006 (although other types of linkage could alternatively be used). Alternatively, one SMS could be shared between two broadcast suppliers, or one supplier could use two SMSs, and so on.

First encrypting units in the form of ciphering units 3008 utilising "mother" smartcards 3010 are connected to the SAS by linkage 3012. Second encrypting units again in the form of ciphering units 3014 utilising mother smartcards 3016 are connected to the multiplexer 2004 by linkage 3018. The receiver/decoder 2020 receives a "daughter" smartcard 3020. It is connected directly to the SAS 3002 by Communications Servers 3022 via the modemmed back channel 4002. The SAS sends amongst other things subscription rights to the daughter smartcard on request.

The smartcards contain the secrets of one or more commercial operators. The "mother" smartcard encrypts different kinds of messages and the "daughter" smartcards decrypt the messages, if they have the rights to do so.

The first and second ciphering units 3008 and 3014 comprise a rack, an electronic VME card with software stored on an EEPROM, up to 20 electronic cards and one smartcard 3010 and 3016 respectively, for each electronic card, one (card 3016) for encrypting the ECMs and one (card 3010) for encrypting the EMMs.

The operation of the conditional access system 3000 of the digital television system will now be described in more detail with reference to the various components of the television system 2000 and the conditional access system 3000.

### Multiplexer and Scrambler

With reference to Figures 1 and 2, in the broadcast centre, the digital video signal is first compressed (or bit rate reduced), using the MPEG-2 compressor 2002. This compressed signal is then transmitted to the multiplexer and scrambler 2004 via the linkage 2006 in order to be multiplexed with other data, such as other compressed data.

The scrambler generates a control word used in the scrambling process and included in the MPEG-2 stream in the multiplexer 2004. The control word is generated internally and enables the end user's integrated receiver/decoder 2020 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the preferred embodimcnt, up to 960 commercial offers may be selected from a bouquet of channels. In the Pay Per View mode, the end user is provided with the capability to purchase events as he wishes. This can be achieved by either pre-booking the event in advance ("pre-book mode"), or by purchasing the event as soon as it is broadcast ("impulse mode"). In the preferred embodiment, all users are subscribers, whether or not they watch in subscription or PPV mode, but of course PPV viewers need not necessarily be subscribers.

Both the control word and the access criteria are used to build an Entitlement Control Message (ECM). This is a message sent in relation with a scrambled program; the message contains a control word (which allows for the descrambling of the program) and the access criteria of the broadcast program. The access criteria and control word are transmitted to the second encrypting unit 3014 via the linkage 3018. In this unit, an ECM is generated, encrypted and transmitted on to the multiplexer and scrambler 2004. During a broadcast transmission, the control word typically changes every few seconds, and so ECMs are also periodically transmitted to enable the changing control word to be descrambled. For redundancy purposes, each ECM typically includes two control words; the present control word and the next control word.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast to the transponder 2014. In respect of each scrambled component of the service, a separate ECM is required. Alternatively, a single ECM may be required for all of the scrambled components of a service.

### Programme Transmission

The multiplexer 2004 receives electrical signals comprising encrypted EMMs from the SAS 3002, encrypted ECMs from the second encrypting unit 3014 and compressed programmes from the compressor 2002. The multiplexer 2004 scrambles the programmes and transmits the scrambled programmes, the encrypted EMMs and the encrypted ECMs as electric signals to a transmitter 2008 of the broadcast centre via linkage 2010. The transmitter 2008 transmits electromagnetic signals towards the satellite transponder 2014 via uplink 2012.

### Programme Reception

The satellite transponder 2014 receives and processes the electromagnetic signals transmitted by the transmitter 2008 and transmits the signals on to the earth receiver 2018, conventionally in the form of a dish owned or rented by the end user, via downlink 2016. The signals received by receiver 2018 are transmitted to the integrated receiver/decoder 2020 owned or rented by the end user and connected to the end user's television set 2022. The receiver/decoder 2020 demultiplexes the signals to obtain scrambled programmes with encrypted EMMs and encrypted ECMs.

If the programme is not scrambled, that is, no ECM has been transmitted with the MPEG-2 stream, the receiver/decoder 2020 decompresses the data and transforms the signal into a video signal for transmission to television set 2022.

If the programme is scrambled, the receiver/decoder 2020 extracts the corresponding ECM from the MPEG-2 stream and passes the ECM to the "daughter" smartcard 3020 of the end user. This slots into a housing in the receiver/decoder 2020. The daughter smartcard 3020 controls whether the end user has the right to decrypt the ECM and to access the programme. If not, a negative status is passed to the receiver/decoder 2020 to indicate that the programme cannot be descrambled. If the end user does have the rights, the ECM is decrypted and the control word extracted. The decoder 2020 can then descramble the programme using this control word. The MPEG-2 stream is decompressed and translated into a video signal for onward transmission to television set 2022.

### Subscriber Management System (SMS)

A Subscriber Management System (SMS) 3004 includes a database 3024 which manages, amongst others, all of the end user files, commercial offers, subscriptions, PPV details, and data regarding end user consumption and authorization. The SMS may be physically remote from the SAS.

Each SMS 3004 transmits messages to the SAS 3002 via respective linkage 3006 which imply modifications to or creations of Entitlement Management Messages (EMMs) to be transmitted to end users.

The SMS 3004 also transmits messages to the SAS 3002 which imply no modifications or creations of EMMs but imply only a change in an end user's state (relating to the authorization granted to the end user when ordering products or to the amount that the end user will be charged).

As described later, the SAS 3002 sends messages (typically requesting information such as call-back information or billing information) to the SMS 3004; so that it will be apparent that communication between the two is two-way.

### Entitlement Management Messages (EMMs)

The EMM is a message dedicated to an individual end user (subscriber), or a group of end users, only (in contrast with an ECM, which is dedicated to one scrambled programme only or a set of scrambled programmes if part of the same commercial offer). Each group may contain a given number of end users. This organisation as a group aims at optimising the bandwidth; that is, access to one group can permit the reaching of a great number of end users.

Various specific types of EMM can be used. Individual EMMs are dedicated to individual subscribers, and are typically used in the provision of Pay Per View services; these contain the group identifier and the position of the subscriber in that group. So-called "Group" subscription EMMs are dedicated to groups of, say, 256 individual users, and are typically used in the administration of some subscription services. This EMM has a group identifier and a subscribers' group bitmap. Audience EMMs are dedicated to entire audiences, and might for example be used by a particular operator to provide certain free services. An "audience" is the totality of subscribers having smartcards which bear the same system identifier (CS ID). Finally, a "unique" EMM is addressed to the unique identifier of the smartcard.

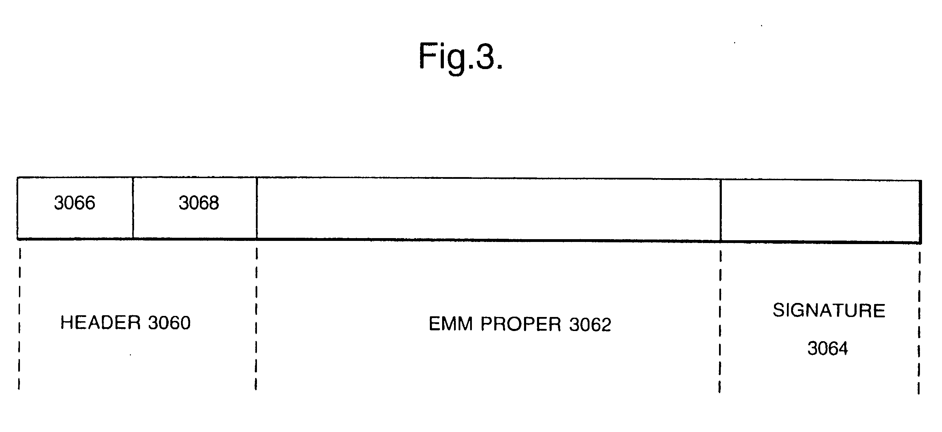

The structure of a typical EMM is now described with reference to Figure 3. Basically, the EMM, which is implemented as a series of digital data bits, comprises a header 3060, the EMM proper 3062, and a signature 3064. The header 3060 in turn comprises a type identifier 3066 to identify whether the type is individual, group, audience or some other type and a length identifier 3068 which gives the length of the EMM. The EMM proper 3062 of course varies greatly according to its type. Finally, the signature 3064, which is typically of 8 bytes long, provides a number of checks against corruption of the remaining data in the EMM.

### Subscriber Authorization System (SAS)

The messages generated by the SMS 3004 are passed via linkage 3006 to the Subscriber Authorization System (SAS) 3002, which in turn generates messages acknowledging receipt of the messages generated by the SMS 3004 and passes these acknowledgements to the SMS 3004.

In overview the SAS comprises a Subscription Chain area to give rights for subscription mode and to renew the rights automatically each month, a Pay Per View Chain area to give rights for PPV events, and an EMM Injector for passing EMMs created by the Subscription and PPV chain areas to the multiplexer and scrambler 2004, and hence to feed the MPEG stream with EMMs. If other rights are to be granted, such as Pay Per File (PPF) rights in the case of downloading computer software to a user's Personal Computer, other similar areas are also provided.

One function of the SAS 3002 is to manage the access rights to television programmes, available as commercial offers in subscription mode or sold as PPV events according to different modes of commercialisation (pre-book mode, impulse mode). The SAS 3002, according to those rights and to information received from the SMS 3004, generates EMMs for the subscriber.

The EMMs are passed to the Ciphering Unit (CU) 3008 for ciphering with respect to the management and exploitation keys. The CU completes the signature 3064 on the EMM and passes the EMM back to a Message Generator (MG) in the SAS 3002. where the header 3060 is added. The EMMs are passed to a Message Emitter (ME) as complete EMMs. The Message Generator determines the broadcast start and stop time and the rate of emission of the EMMs, and passes these as appropriate directions along with the EMMs to the Message Emitter. The MG only generates a given EMM once; it is the ME which performs cyclic transmission of the EMMs.

On generation of an EMM, the MG assigns a unique identifier to the EMM. When the MG passes the EMM to the ME, it also passes the EMM ID. This enables identification of a particular EMM at both the MG and the ME.

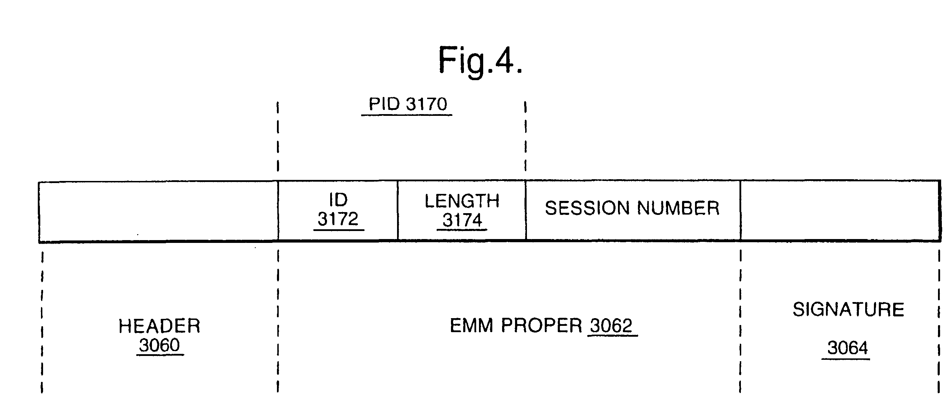

Figure 4 illustrates an exemplary EMM (in fact a PPV EMM, which is the simplest EMM). The PID (Packet identifier) 3170 comprises two portions, the actual ID 3172, and the length parameter for the packet 3174 (necessary in order that the start of the next packet can be identified). The whole PID is expressed in just one byte of information, 4 bits being reserved for the ID. and four for the length.

### Smartcard

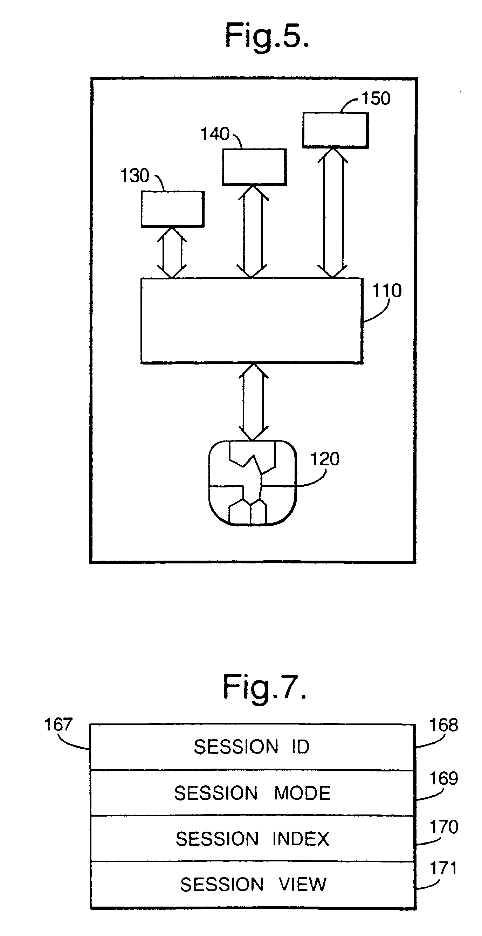

A daughter, or "subscriber", smartcard 3020 is schematically shown in Figure 5 and comprises an 8 bit microprocessor 110, such as a Motorola 6805 microprocessor, having an input/output bus coupled to a standard array of contacts 120 which in use are connected to a corresponding array of contacts in the card reader of the receiver/decoder 2020, the card reader being of conventional design. The microprocessor 110 is also provided with bus connections to preferably masked ROM 130, RAM 140 and EEPROM 150.

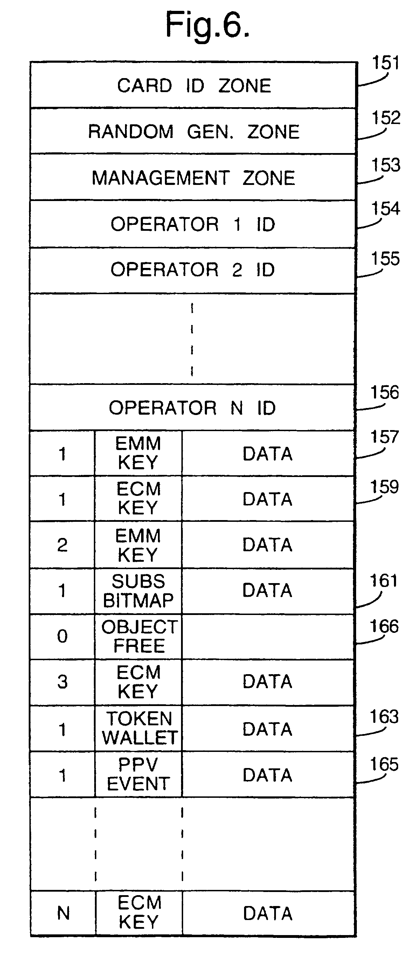

The EEPROM 150 contains certain dynamically-created operator zones 154, 155, 156 and dynamically-created data zones which will now be described with reference to Figure 6.

EEPROM 150 comprises a permanent "card ID" (or manufacturer) zone 151 of 8 bytes which contains a permanent subscriber smartcard identifier set by the manufacturer of the smartcard 3020.

When the smartcard is reset, the microprocessor 110 issues a signal to receiver/decoder 2020, the signal comprising an identifier of the conditional access system used by the smartcard and data generated from data stored in the smartcard, including the card ID. This signal is stored by the receiver/decoder 2020, which subsequently utilises the stored signal to check whether the smartcard is compatible with the conditional access system being used by the receiver/decoder 2020.

The EEPROM 150 also contains a permanent "random number generator" zone 152 which contains a program for generating pseudo-random numbers. Such random numbers are used for diversifying transaction output signals generated by the smartcard 3020 and sent back to the broadcaster.

Below the random number generator zone 152 a permanent "management" zone 153 of 144 bytes is provided. The permanent management zone 153 is a specific operator zone utilised by a program in the ROM 130 in the dynamic creation (and removal) of zones 154, 155, 156... as described below. The permanent management zone 153 contains data relating to the rights of the smartcard to create or remove zones.

Below the management zone 153 is a series of "operator ID" zones 154, 155, 156 for operators 1, 2 ..... N respectively. Normally at least one operator ID zone will be preloaded into the EEPROM of the subscriber smartcard 3020 so that the end user can decrypt programmes broadcast by that operator. However further operator ID zones can subsequently be dynamically created using the management zone 153 in response to a transaction output signal generated via his smartcard 3020 by the end user (subscriber), as will subsequently be described.

Each operator zone 154, 155, 156 is associated with one or more "operator data objects" stored in the EEPROM 150. As shown in Figure 6, a series of dynamically created "operator data" objects 157-165 are located below the operator ID zones. Each of these objects is labelled with:
a) an "identifier" 1, 2, 3 .... N corresponding to its associated operator 1, 2, 3 ... N as shown in its left hand section in Figure 6;
b) an "ID" indicating the type of object; and
c) a "data" zone reserved for data, as shown in the right hand section of each relevant operator object in Figure 6. It should be understood that each operator is associated with a similar set of data objects so that the following description of the types of data in the data objects of operator 1 is also applicable to the data objects of all the other operators. Also it will be noted that the data objects are located in contiguous physical regions of the EEPROM and that their order is immaterial.

Deletion of a data object creates a "hole" 166 in the smartcard, that is, the number of bytes that the deleted objects had previously occupied are not immediately occupied. The thus "freed" number of bytes, or "hole" are labelled with:
a) an "identifier" 0; and
b) an "ID" indicating that the bytes are free to receive an object.

The next data object created fills the hole, as identified by the identifier 0. In this manner the limited memory capacity (4 kilobytes) of the EEPROM 150 is efficiently utilised.

Turning now to the set of data objects associated with each operator, examples of the data objects are now described.

Data object 157 contains an EMM key used for decrypting encrypted EMM's received by the receiver/decoder 2020. This EMM key is permanently stored in the data object 157. This data object 157 may be created prior to distribution of the smartcard 3020, and/or may be created dynamically when creating a new operator zone (as described above).

Data object 159 contains ECM keys which are sent by the associated operator (in this case operator 1) to enable the end user to decrypt the particular "bouquet" of programs to which he has subscribed. New ECM keys are sent typically every month, along with a group subscription (renewal) EMM which renews the end user's overall right to view the broadcast from (in this case) operator 1. The use of separate EMM and ECM keys enables viewing rights to be purchased in different ways (in this embodiment by subscription and individually (Pay Per View)) and also increases security. The Pay Per View (PPV) mode will be described subsequently.

Since new ECM keys are sent periodically, it is essential to prevent a user from using old ECM keys, for example by switching off the receiver/decoder or re-setting a clock to prevent expiry of an old ECM key so that a timer in the receiver/decoder 2020 could be overridden. Accordingly operator zone 154 comprises an area (typically having a size of 2 bytes) containing an obsolescence date of the ECM keys. The smartcard 3020 is arranged to compare this date with the current date which is contained in received ECMs and to prevent decryption if the current date is later than the obsolescence date. The obsolescence date is transmitted via EMMs, as described above.

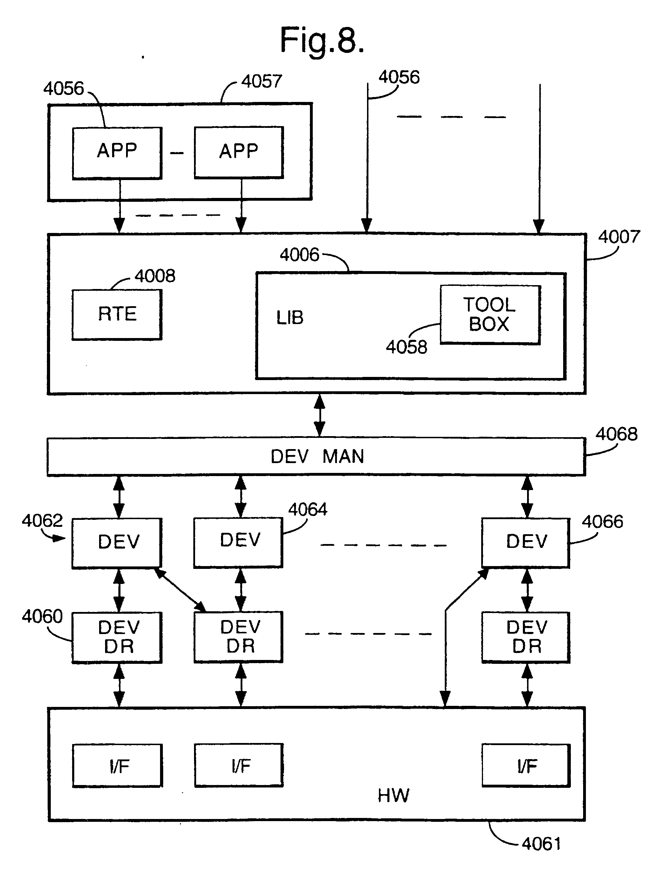

With reference to Figure 7, the PPV event description 167 contains a "session ID" 168 identifying the viewing session (corresponding to the program and the time and date of broadcasting) a "session mode" 169 indicating how the viewing right is being purchased (e.g. in pre-book mode), a "session index" 170 and a "session view" 171.

In respect of receiving a programme in PPV mode, the receiver decoder 2020 determines whether the programme is one sold in PPV mode. If so, the decoder 2020 checks, using the items stored in the PPV event description 167 whether the session ID for the programme is stored therein. If the session ID is stored therein, the control word is extracted from the ECM.

If the session ID is not stored therein, by means of a specific application the receiver/decoder 2020 displays a message to the end user indicating that he has the right to view the session at a cost of, say, 25 tokens, as read from the ECM or to connect to the communications servers 3022 to purchase the event. Using the tokens, if the end user answers "yes" (by means of remote controller 2026 (see Figure 2)) the decoder 2020 sends the ECM to the smartcard, the smartcard decreases the wallet of the smartcard 3020 by 25 tokens, writes the session ID 168, the session mode 169, the session index 170 and the session view 171 in the PPV event description 167 and extracts and deciphers the control word from the ECM.

In the "pre-book" mode, an EMM will be passed to the smartcard 3020 so that the smartcard will write the session ID 168, the session mode 169, the session index 170 and the session view 171 in the PPV event description 167 using the EMM.

The session index 170 can be set to differentiate one broadcast from the other. This feature permits authorization to be given for a subset of broadcasts, for example, 3 times out of 5 broadcasts. As soon as an ECM with a session index different from the current session index 170 stored in the PPV event description 167 is passed to the smartcard, the number of the session view 171 is decreased by one. When the session view reaches zero, the smartcard will refuse to decipher an ECM with a different session index to the current session index.

The initial value of the session view depends only on the way in which the broadcast supplier wishes to define the event to which it relates; the session view for a respective event may take any value.

The microprocessor 110 in the smartcard implements a counting and a comparison program to detect when the limit to the number of viewings of a particular program has been reached.

All of the session ID 168, the session mode 169, the session index 170 and the session view 171 in the PPV event description 167 may be extracted from the smartcard using the "call-back" procedure as described previously.

Each receiver/decoder 2020 contains an identifier which may either identify uniquely that receiver/decoder or identify its manufacturer or may classify it in some other way in order to enable it to work only with a particular individual smartcard, a particular class of smartcards made by the same or a corresponding manufacturer or any other class of smartcards which are intended for use with that class of receiver/decoders exclusively.

In this manner the receiver decoders 2020 which have been supplied by one broadcast supplier to the consumer are protected against the use of non-authorised daughter smartcards 3020.

### Receiver/Decoder

With reference to Figure 8, the receiver/decoder 2020 comprises a run time engine 4008 running under the control of a microprocessor and a common application programming interface 4054. They are installed in every receiver/decoder 2020 so that all receiver/decoders 2020 are identical from the application point of view.

For the purposes of this description, an application is preferably a piece of computer code for controlling high level functions of preferably the receiver/decoder 2020. For example, when the end user positions the focus of a remote controller on a button object seen on the screen of the television set 2022 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 2020, or broadcast and downloaded into the RAM or FLASH memory of the receiver/decoder 2020.

Applications are stored in memory locations in the receiver/decoder 2020 and represented as resource files. The applications can use data files, such as icon library files, image files, character font files, colour table files and ASCII text files. An interactive application can also obtain on-line data by effecting inputs and/or outputs.

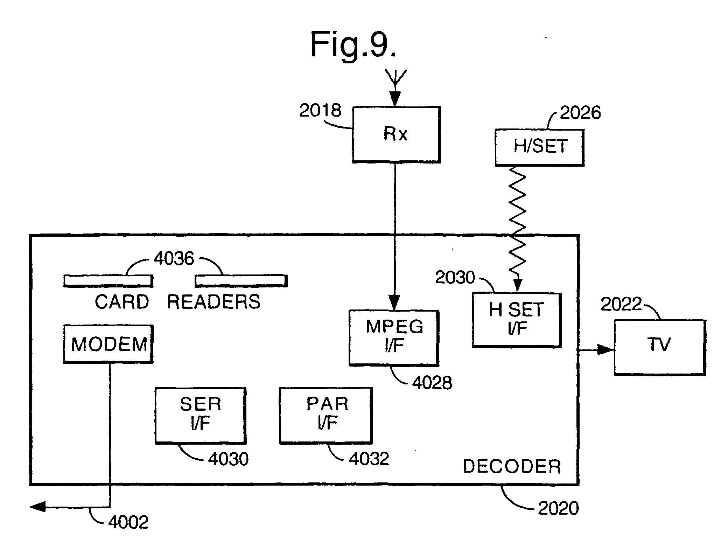

Referring to Figure 9, the receiver/decoder 2020 includes several interfaces; specifically, a tuner 4028 for the MPEG signal flow, a serial interface 4030, a parallel interface 4032, and two card readers 4036, one for a smartcard 3020 forming part of the system and one for bank cards (used for making payments, home banking, etc) or another smart card. The receiver/decoder also includes an interface 4034 to a modemmed back channel 4002 to the television signal producer, so that the user can indicate preferences, etc back to the television signal (programme) producer.

The receiver/decoder 2020 contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

With reference to Figure 9, the system can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061. The receiver/decoder hardware can be regarded as including the various ports or interfaces as discussed above (the interface 2030 for the handset 2026, the MPEG stream interface 4028, the serial interface 4030, the parallel interface 4032, the interfaces to the card readers 4036, and the interface 4034 to the modemmed back channel 4002).

With reference to Figure 8, various applications 4057 are coupled to the unit 4007; some of the more commonly used applications may be more or less permanently resident in the system, as indicated at 4057, while others will be downloaded into the system, eg from the MPEG data stream or from other ports as required.

The unit 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware 4060 in the receiver/decoder 2020, such as hardware and software version numbers and available RAM space, and a function used when downloading a new device 4062. Functions can be downloaded into the library, being stored in Flash or RAM memory.

The run time engine 4008 is coupled to a device manager 4068 which is coupled to a set of devices 4062 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

Each function of the receiver/decoder 2020 is represented as a device 4062. Devices can be either local or remote. Local devices 4064 include smartcards, SCART connector signals, modems, serial and parallel interfaces, a MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

When a new device 4062 is created, it can be installed in existing receiver/decoders 2020 by downloading the relevant application 4056 from the broadcast centre. This downloading is performed in the receiver/decoder 2020 by an application 4056 which checks the hardware and software versions and, if correct, loads the software module representing the new device 4062 and asks a procedure of the library 4006 to install the new device code within the firmware (in Flash memory). This can provide a flexible and secure installation of new functions within the receiver/decoder 2020 without affecting the rest of the software.

The device manager 4068 is a common software interface between the application 4056 and the specific functions of the receiver/decoder 2020. The device manager 4068 controls access to devices 4062, declares receipt of an unexpected event, and manages shared memory.

The run time engine 4008 runs under the control of the microprocessor and a common application programming interface. They are installed in every receiver/decoder 2020 so that all receiver/decoders 2020 are identical from the application point of view.

The engine 4008 runs applications 4056 on the receiver/decoder 2020. It executes interactive applications 4056 and receives events from outside the receiver/decoder 2020, displays graphics and text, calls devices for services and uses functions of the library 4006 connected to the engine 4008 for specific computation.

The run time engine 4008 is an executable code installed in each receiver/decoder 2020, and includes an interpreter for interpreting and running applications. The engine 4008 is adaptable to any operating system, including a single task operating system (such as MS-DOS). The engine 4008 is based on process sequencer units (which take various events such as a key press, to carry, out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory 2028. Only the necessary code is loaded into the RAM or Flash memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG-2 transport stream or via a built-in receiver/decoder mode, the code must be decompressed before loading it into the RAM. The engine 4008 also comprises an interpreter to interpret the application code to update various variable values and determine status changes, and an error checker.

Before using the services of any device 4062, a program (such as an application instruction sequence) has to be declared as a "client", that is, a logical access-way to the device 4062 or the device manager 4068. The manager gives the client a client number which is referred to in all accesses to the device. A device 4062 can have several clients, the number of clients for each device 4062 being specified depending on the type of device 4062. A client is introduced to the device 4062 by a procedure "Device: Open Channel". This procedure assigns a client number to the client. A client can be taken out of the device manager 4068 client list by a procedure "Device: Close Channel".

Each device interfaces with an application under the control of the device manager 4068 by means of one of the three standard procedures, which are common to other devices. Information may be passed between an application and the device by means of tables. The three basic procedures are summarised briefly below:-
1) Device: Call. This command can be used by an application for performing synchronous commands or data transfer. Execution of the application is suspended until control is returned when the operation by the device driver has completed; this allows operations which must be performed in strict sequence to be controlled reliably.
2) Device: I/O. This command allows asynchronous operation. That is, an application can send a request for a data transfer or a particular function to be performed by the device driver and execution of the application can continue while the data transfer or function is performed by the device driver.
3) Device: Event. The event trapping function enables events to be signalled by the device to an application, and for particular action to be taken by the application in response to the event independently of the code the application is executing at the time the event is signalled; effectively the application is interrupted. Events may be prioritised. Events may be used to signal events occurring on the interface, such as a bus reset, or to provide monitoring of asynchronous commands, for example by signalling completion of a requested data transfer.

As noted above, the main loop of the run time engine is coupled to a variety of process sequencer units, and when the main loop encounters an appropriate event, control is temporarily transferred to one of the process sequencer units.

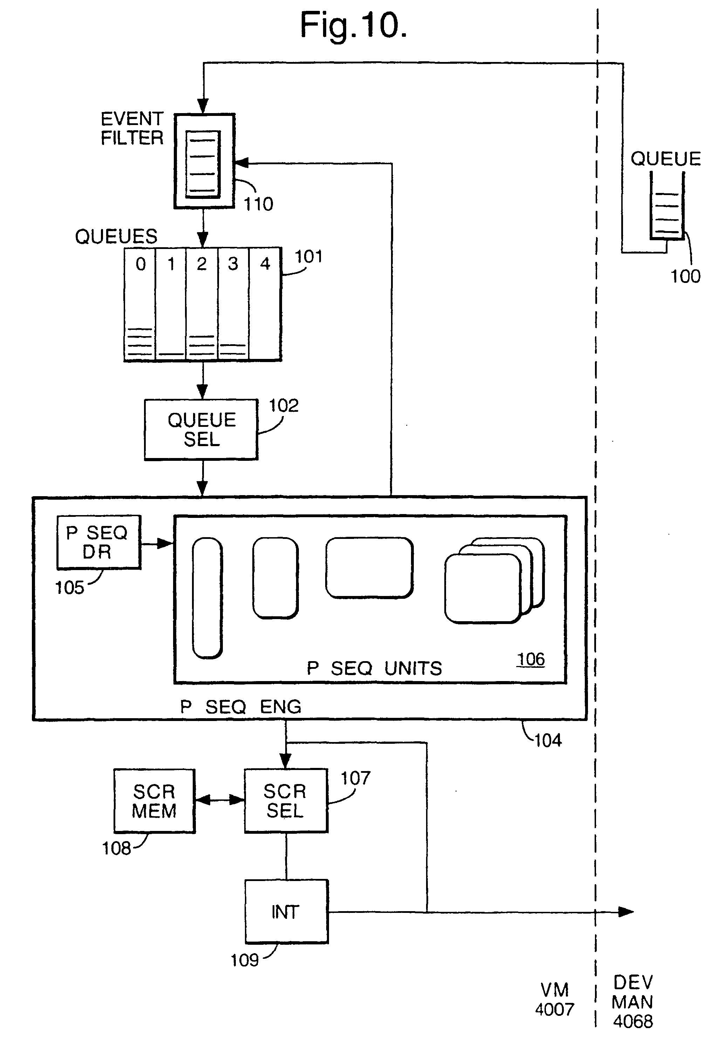

Referring to Figure 10, the device manager includes a queue 100 into which events from the devices are passed for temporary storage. At suitable intervals, the virtual machine sends a signal to this queue to extract the first item from it. This event item is moved to a queue structure 101 in the virtual machine. Depending on the priority level of the event item, it is inserted into the appropriate one of the 5 queues 0 to 4. Event items are extracted from the queue structure 101 by a queue selector unit 102 under the control of the run time engine.

When an event is selected from the queue structure 101, it is passed to a process sequencer unit engine 104, which consists of a process sequencer unit driver 105 and a set of process sequencer units 106. Each process sequencer unit is a set of action-groups linked together, so that each step from one action-group to the next action-group is, in general, dependent on the current action-group and the nature of the event. Different process sequencer units have different sizes and complexities, including one in which the "next" action-group, ie the action-group to which the system steps on in response to an event, is dependent solely on the nature of the event but is independent of the current action-group. Also, as is shown at the right-hand side of the process sequencer units block, there may be several copies of a process sequencer unit, ie several identical process sequencer units, to deal eg with several separate data streams using identical protocols through a single port.

When an event is selected, it is passed to the appropriate process sequencer unit. This selects the appropriate outlet from the current action-group on the process sequencer unit. This results in the appropriate next action-group being selected and the actions in that action-group being performed, involving eg the sending of a message to the device manager or the execution of an instruction sequence. Action-groups in the process sequencer unit can also send event messages to other process sequencer units.

If an instruction sequence is selected, the identification of the instruction sequence is sent to a instruction sequence selector 107. This obtains the desired instruction sequence from a instruction sequence memory 108 and passes it to a instruction sequence interpreter 109, which executes the instruction sequence.

The system also includes a filter 110, which is loaded with event types eg from the process sequencer units 106. When an event item is passed from the queue 100 in the device manager to the queue structure 101 in the virtual machine, its type or character is matched against the list in the filter 110, and if it is of a type which is not recognized, it is rejected. This ensures that if say the device manager or the keyboard generates events of a type which the virtual machine cannot deal with, those events are not passed to the queue structure 101. (If events of this kind were passed to the queue structure 101, either they would accumulate in that queue structure or they might cause malfunctioning of the process sequencer unit engine 104.)

Thus, it can be seen that our basic system provides a platform having considerable flexibility in enabling an application to communicate with a variety of devices.

### Conditional Access Device

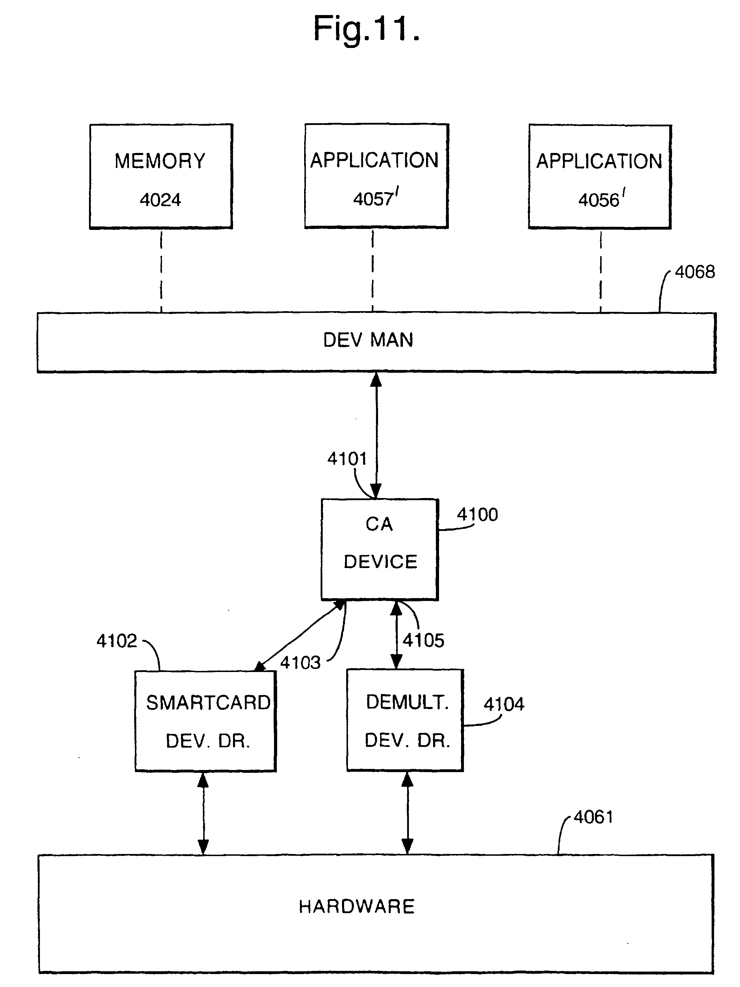

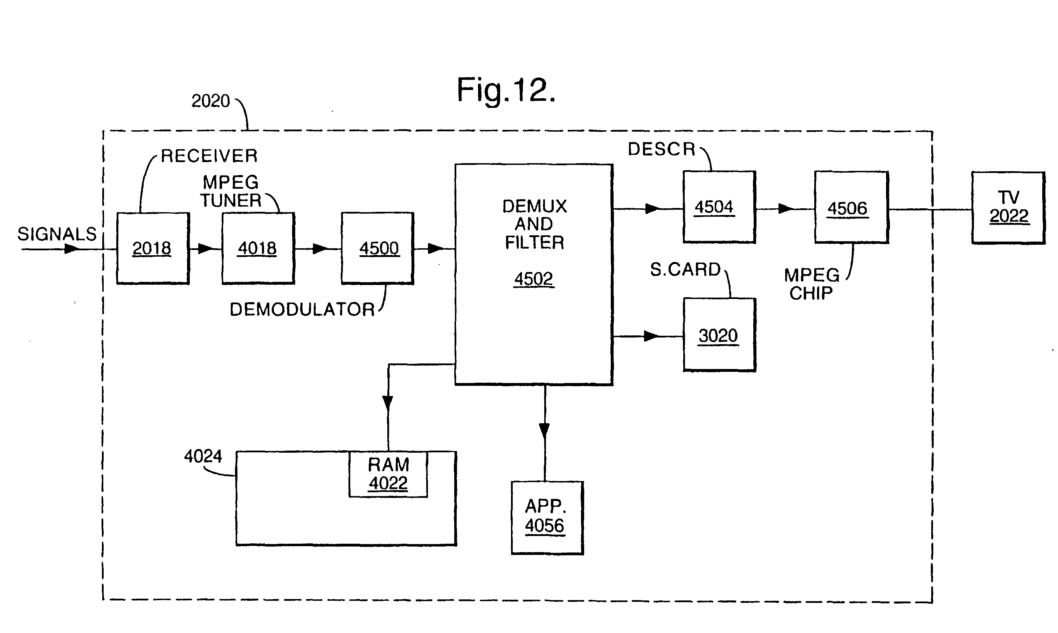

With reference to Figures 11 and 12, the receiver/decoder 2020 includes a conditional access device, or CA device, 4100. The CA device 4100 is coupled via port 4103 to device driver 4102 for the smartcard reader 4036 and via port 4105 to device driver 4104 for a demultiplexer and filter 4502 of the receiver/decoder 2020. The CA device is also coupled via port 4101 to the device manager 4068 to receive commands from, and transmit messages to, applications 4056', 4057' stored in the receiver/decoder 2020 and to access the memory 4024 of the receiver/decoder 2020 in order, for example, to retrieve data stored therein.

The CA device 4100 can inform a configuring application, for example a resident application 4057', of the conditional access systems supported by the receiver/decoder and the conditional access system currently being used by the receiver decoder. Such a configuring application is able to change the conditional access system currently being used by the receiver/decoder 2020. The type of conditional access system currently being used by the receiver/decoder is written in a buffer in the memory 4024 of the receiver/decoder as allocated by the CA device 4100. The address of this buffer may be transmitted to the configuring application 4057' via device manager 4068. This buffer also contains information regarding the version of the conditional access system currently being used by the receiver/decoder, each conditional access system supported by the receiver/decoder, and the version of each conditional access system supported by the receiver/decoder.

A command "CALL_SELECT" enables an application program to select the conditional access system to be used by the receiver/decoder. The type and version number of the conditional access system are stored in a memory zone in the memory 4024 of the receiver/decoder. The address of the memory zone associated with any conditional access system supported by the receiver/decoder is also transferable to the configuring application 4057' via device manager 4068. Following receipt of the address of the memory zone, the application program sends the address to-the CA device 4100 in this command. In response to the command, the CA device 4100 changes the data stored in the buffer in the memory zone of the memory 4024. The command returns a signal indicating completion of the command, or failure of the command if an EMM or ECM is either being loaded by the receiver/decoder 2020 or being processed by the receiver/decoder 2020.

The CA device 4100 enables EMMs to be loaded, and ECMs to be demultiplexed for component scrambling, for any conditional access system supported by the receiver/decoder 2020.

With reference to Figure 12, electromagnetic signals received by receiver 2018 are transmitted to MPEG tuner 4028. The tuner typically scans a range of frequencies. stopping only when a carrier frequency is detected within that range. The thus detected signals are transmitted to demodulator 4500, which demodulates the signals and transmits them to demultiplexer and filter 4502.

The demultiplexer and filter 4502 performs manipulation of the received datastream so that only the required components of the datastream are extracted by the receiver/decoder 2020 from the datastream. The data manipulation is conducted according to a manipulation protocol which is configurable in dependence on the conditional access system currently being used by the receiver/decoder.

Data is transported in the MPEG data stream in the form of data packets of typically 188 bytes within respective types of data stream, for example, video data streams, audio data streams and teletext data streams. Each packet is preceded by a Packet Identifier (PID) of 13 bits, one PID for every packet transported in the MPEG data stream. A programme map table (PMT table) contains a list of the different data streams and defines the contents of each data stream according to the respective PID. Each PMT table is associated with a respective broadcast channel. A PID may alert a device to the presence of applications in the data stream, the PID being identified using the PMT table. The value of the PID provides a parameter associated with the manipulation protocol.

The data packets relating to applications, EMMs and ECMs typically comprise one or more MPEG sections. To enable video packets, audio packets, teletext packets and subtitle packets for a service to be downloaded by the receiver/decoder, the correct EMMs and ECMs must be provided beforehand.

The manipulation protocol of the demultiplexer and filter 4502 utilises one or more of typically 8 bytes of an MPEG section of the data stream, typically offset byte 0 and offset bytes 3 to 9, to filter sections from the data stream to enable the desired application, EMM or ECM to be downloaded. In dependence on the value of the PID of the application. EMM or ECM to be downloaded, the filter is configurable to enable only that particular application, EMM or ECM to be downloaded. Following filtering by the demultiplexer and filter 4502, an EMM or ECM can be transmitted to the smartcard 3020 inserted in the smartcard reader of the receiver decoder for storage therein.

Demultiplexer and filter 4502 is connected to a descrambler 4504, which in turn is connected to MPEG chip 4506. The chip 4506 in turn is connected to television 2022. The demultiplexer and filter 4502 typically provides up to 32 outputs connected to RAM volume 4022 of the memory 4024 of the receiver/decoder 2020.

The video packets, audio packets, teletext packets and subtitle packets for a service are demultiplexed by the demultiplexer 4502, descrambled by the descrambler 4504, using a control word extracted from an ECM, and transmitted to MPEG chip 4506 for processing into signals in a form compatible with the television set 2022.

### EMM Loading

The CA device 4100 controls the loading of ENIMs in the receiver/decoder in dependence on the conditional access system being, or to be, used by the receiver/decoder 2020.

A conditional access table (CAT table) contains a list of the different conditional access systems (in the form of system identifiers (CS IDs)) and defines the PIDs 3170 of the EMMs associated with each CS ID for use in the demultiplexing and filtering of data. The CAT table is downloaded regularly from the datastream and stored in a memory zone of the memory 4024 of the receiver/decoder 2020. The CAT table may be updated at any time, for example, if the PIDs of any of the EMMs identified thereby has changed because the EMM packets are being transmitted from a new transponder.

When an updated CAT table has been downloaded in the receiver/decoder 2020, an application, using a command "CALL_SET_CAT", can inform the CA device 4100 of the presence of the new CAT table.

The list of PIDs for each system is used in the configuration of the demultiplexer and filter 4502 of the receiver/decoder 2020 so that, for the conditional access system being used by the receiver/decoder, the correct data manipulation protocol is used to enable the correct EMMs to be transmitted to, for example, the smartcard 3020.

Therefore, when there is a change in either:
(i) the CAT table; or
(ii) the conditional access system being used by the receiver/decoder;
the demultiplexer and filter 4502 is updated to change the data manipulation protocol.

Upon receipt of a command "CALL_SET_INFO" from an application, the CA device 4100 identifies the conditional access system used by the receiver/decoder and generates, using the CAT table stored in the memory 4024, a table comprising the values of the PIDs of the EMMs of that conditional access system.

When the CA device 4100 receives a command "IO_EMM_START" from an application, the thus-generated table is transmitted to the demultiplexer and filter driver 4104 to configure the demultiplexer and filter 4502 accordingly so that the correct manipulation protocol is used. The command returns a signal to the application 4057' indicating completion of the command, or failure of the command if an EMM is currently being downloaded or if no conditional access system has been set using the CA_SELECT command.

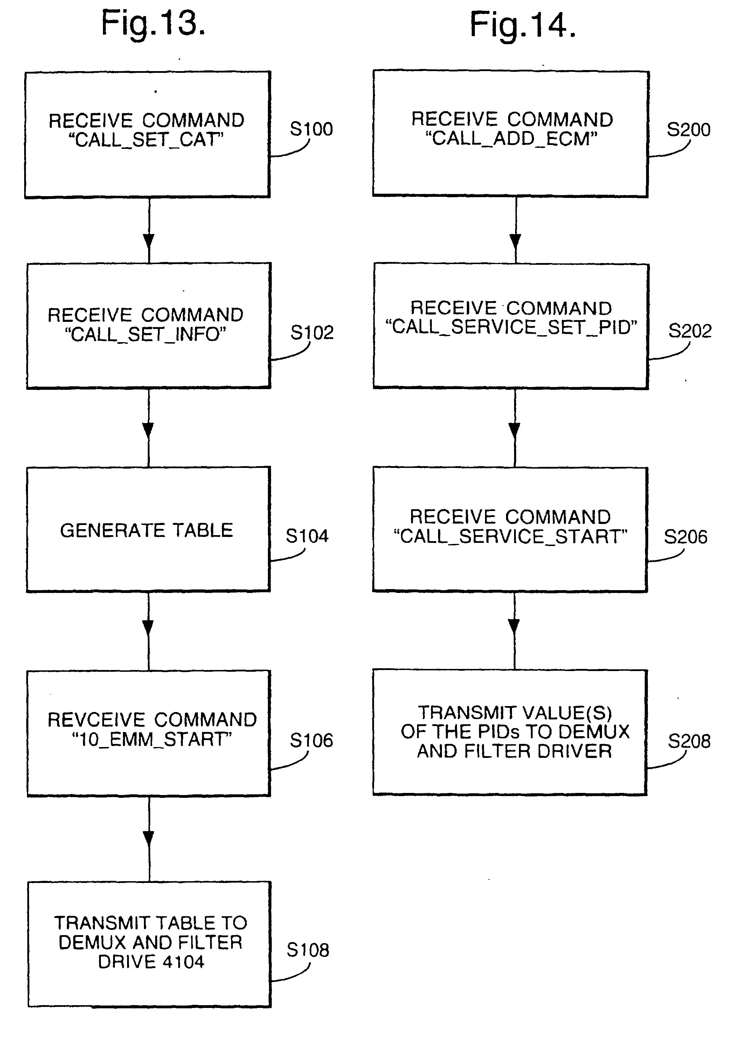

The above operation of the CA device is summarised in Figure 13.

First, in step S100, the CA device receives command "CALL_SET_CAT" via port 4101 from an application which informs the CA device of a new CAT table in the memory 4024 of the receiver/decoder 2020. From the CAT table, the CA device is able to access a list of all of the different conditional access systems (in the form of system identifiers (CS IDs)) supported by the receiver/decoder 2020 and lists of the PIDs of the EMMs associated with each CS ID. These lists provide parameters associated with the manipulation protocol of the demultiplexer and filter 4502.

Next, in step S102, the CA device receives command "CALL_SET_INFO" via port 4101 from an application, which identifies the conditional access system used by the receiver decoder and, in response, the CA device generates in step S104, using the CAT table, a table comprising the values of the PIDs of the EMMs of that conditional access system only as retrieved from the memory 4204 via port 4101.

Finally, in step S106, the CA device receives command "IO_EMM_START" via port 4101 from an application, and in step S108 the table generated in step S104 is transmitted to the demultiplexer and filter driver 4104 via port 4105 to configure the manipulation protocol for the demultiplexer and filter 4502, that is, to configure the filter of the demultiplexer and filter 4502, so that only the EMMs of that conditional access system can be downloaded by the receiver/decoder 2020.

In the above operation, only those parameters necessary to configure the manipulation protocol are transmitted to the demultiplexer and filter 4502.

With respect to the subsequent handling of the downloaded EMMs, event "EVENT_CA_EMM" from the CA device 4100 is arranged to signal to an application the reception by a smartcard of an EMM transmitted thereto, and provide a parameter block addressed to an application which contains the address of the stored EMM and information provided by the smartcard driver 4102 via port 4103, this information depending on the conditional access system being used by the receiver/decoder 2020. Event "EVENT_CA_EMM_ ERROR" is arranged to signal the rejection by a smartcard of an EMM transmitted thereto, for example, if the smartcard does not have the right to store the EMM, and provide a data block addressed to the application which contains information provided by the smartcard, this information depending on the conditional access system being used by the receiver/decoder.

Alternatively, an "applicative" EMM (that is, an EMM transmitted in respect of an application) may be stored in the memory of the receiver/decoder, for example, in order to verify that the application 4056 is functioning correctly. Event "EVENT_CA_APP_EMM" is arranged to signal to an application the reception of an applicative EMM. The event provides a data block addressed to the application which contains the address of the stored EMM.

### ECM Loading

The CA device 4100 manages the demultiplexing of ECMs for component descrambling.

Using a command "CALL_ADD_ECM" an application provides the CA device 4100 with the PID of an ECM to be loaded by the receiver/decoder 2020 as specified by the PMT table. The PMT table is stored in the memory 4024, which contains a list of the different data streams and defines the contents of each data stream according to the respective PID. The PID is provided together with any other information relating to the conditional access system selected using the CALL_SELECT command necessary to manage the ECM. Such information typically includes an identification of the conditional access system, the session number of a PPV event, and the index number of a PPV event.

The CA device 4100 assigns an identifier "DESCR_ID" for the PID of the ECM and returns to the application, via device manager 4068, an address of the memory zone in which the DESCR_ID for the PID of the ECM is to be found. An ECM PID corresponds to a unique DESCR_ID. Alternatively, the CA device may return to the application, via device manager 4068, an error message indicating that no conditional access system has been selected, the PID has been transmitted previously to the device, or that a predetermined maximum number of DESCR_IDs has been reached.

The CA device 4100 also prepares to return the value of the PID to the demultiplexer and filter driver 4104 to enable the ECM to be received by the receiver/decoder.

The application subsequently transmits a command "CALL_SERVICE_SET_PID" to the CA device 4100 to identify the addresses in the memory of the receiver/decoder of the PIDs of the video, audio, subtitle and teletext packets of the event to be demultiplexed. These values of these PIDs can be linked to the DESCR_ID identifier previously assigned to the PID of the ECM. The identifier can then be used by the application to identify the components of the datastream without the need for the application to receive values for all of these components.

Demultiplexing and filtering of the video, audio, subtitle and teletext packets does not commence until the application transmits a command "CALL_SERVICE_START" to the CA device 4100. Upon receipt of this command, the CA device transmits to the demultiplexer and filter driver 4104 the value of the PID of the ECM and the data packets of the event. The ECM is demultiplexed, filtered and transmitted to the smartcard 3020 for storage therein. The control word for the descrambling of the components of the event is extracted from the ECM and transmitted to the descrambler 4504.

The above operation of the CA device is summarised in Figure 14.

First, in step S200, the CA device receives command "CALL_ADD_ECM" via port 4101 from an application, which provides the CA device 4100 with the PID of an ECM to be loaded by the receiver/decoder 2020 as specified by the PMT table, stored in the memory 4024 of the receiver/decoder. The CA device 4100 assigns an identifier DESCR_ID to the PID of the ECM and returns the address of the memory zone of the identifier to the application.

Next, in step S202, the CA device receives command "CALL_SERVICE_SET_ PID" from an application, which provides the CA device 4100 with the addresses in the memory of the receiver/decoder of the PIDs of the video, audio, subtitle and teletext packets of the event to be demultiplexed so that the values of the PIDs can be retrieved by the CA device 4100. The values of the PIDs are linked to the DESCR_ID assigned to the PID of the ECM.

Finally, in step S204, the CA device receives command "CALL_SERVICE_START" via port 4101 from an application, and in step S206 the CA device 4100 transmits to the demultiplexer and filter driver 4104 the value(s) of the PID(s) of the ECM and the packets of the event.

Again, in the above operation, only those parameters necessary to configure the manipulation protocol are transmitted to the demultiplexer and filter 4502. In addition, a single identifier DESCR_ID is assigned to the PIDs of the ECM and the various different types of data packet, to which the application may subsequently refer without reference to all of the parameters linked thereto.

As described above, the CA device 4100 manages the loading of EMMs and the demultiplexing of ECMs for component descrambling for any conditional access system supported by the receiver/decoder 2020. For each of these management functions of the CA device 4100, the same commands are sent by any application to the CA device 4100; with respect to EMM loading, the CA device receives commands "CALL_SET_CAT", "CALL_SET_INFO" and "CALL_EMM_START" from any application irrespective of the conditional access system to be used, and, with respect to ECM management, the CA device receives commands "CALL_ADD_ECM", "CALL_SERVICE_SET_PID" and "CALL_SERVICE_START" from any application, again irrespective of the conditional access system to be used. The EMM loading and ECM management only commences after the receipt of the final command; there is no need to update, for example, the demultiplexer and filter 4502 until a command to start EMM loading is received by the CA device 4100. There is also no need to transmit all of the parameters listed in the CAT table and PMT table to the demultiplexer and filter 4502; only the parameters associated with the required manipulation protocol are transmitted to the demultiplexer and filter 4502. Similarly, there is no need to transmit all of the parameters in the PMT table to an application, only a DESCR_ID identifier of the parameters.

It will be understood that the present invention has been described above purely by way of example, and modifications of detail can be made within the scope of the invention.

Each feature disclosed in the description, and (where appropriate) the claims and drawings may be provided independently or in any appropriate combinauon.

In the aforementioned preferred embodiments, certain features of the present invention have been implemented using computer software. However, it will of course be clear to the skilled man that any of these features may be implemented using hardware. Furthermore, it will be readily understood that the functions performed by the hardware, the computer software, and such like are performed on or using electrical and like signals.

## Claims

1. A device (4100) for use in a receiver/decoder (2020) operable with different conditional access systems, the receiver/decoder including means (4502) for filtering data received by the 5 receiver/decoder (2020) and which is configurable in dependence on a said conditional access system, and means (4024) for storing parameters associated with the filtering of said data for all of the different conditional access systems, the device (4100) comprising:
means (4101) for receiving a command instructing configuration of the filtering means (4502) in dependence on a particular one of said conditional access systems;
means (4101) for retrieving from the storage means (4024) a parameter associated with said particular one of the conditional access systems; and
means (4105) for outputting said parameter to the filtering means (4502) for use in configuring the filtering means (4502), whereby the filtering means (4502) is not required to receive all parameters necessary for configuration thereof in dependence on all ofthe conditional access systems.

2. A device according to Claim 1, arranged to output said parameter to the filtering means (4502) upon receipt of a command instructing output of said parameter.

3. A device according to Claim 1 or 2, comprising means for receiving a command notifying the device of updating of the parameters stored in the storage means.

4. A device according to any preceding claim, wherein said parameters include an identifier of the conditional access system currently being used by the receiver/decoder (2020).

5. A device according to Claim 4, wherein said parameter is associated with said identifier.

6. A device according to any preceding claim, wherein the device is capable of receiving commands from a configuring application.

7. A device according to Claim 6, wherein the device is capable of changing an identifier of the conditional access system currently being used by the receiver/decoder in response to a command from the configuring application.

8. A device according to any preceding claim, wherein each said parameter comprises at least one byte of a section of a data packet to be received by the receiver/decoder.

9. A device according to any preceding claim, wherein each said parameter comprises an identifier of a data packet to be received by the receiver/decoder.

10. A device according to Claim 9, wherein the parameters include an identifier of an entitlement management message (EMM).

11. A device according to Claim 9, wherein the parameters include an identifier of an ECM.

12. A device according to any preceding claim, arranged to receive requests from a plurality of applications for a plurality of parameters.

13. A receiver/decoder including a device (4100) according to any preceding claim, said filtering means (4502) arranged to operate under the control ofthe device to filter data and said means for storing parameters associated with the filtering of said data for all of the different conditional access systems.

14. A receiver/decoder according to Claim 13, wherein said filtering means comprises a demultiplexer and filter (4502) operable to filter specific components of data from data received by the receiver/decoder.

15. A receiver/decoder according to Claim 14, wherein the parameter changes the filter so that only specific components of the received data are downloaded by the receiver/decoder.

16. A method of configuring a receiver/decoder to access data, the receiver/decoder including 5 means (4502) for filtering data received by the receiver/decoder (2020) and which is configurable in dependence on a said conditional access system, and means (4024) for storing parameters associated with the filtering of said data for all of the different conditional access systems, the method comprising the steps of:
receiving a command instructing configuration of the filtering means (4502) in dependence on a particular one of said conditional access systems;
retrieving from the storage means (4024) a parameter associated with said particular one of the conditional access systems; and
outputting said parameter to the filtering means (4502) for use in configuring the filtering means (4502), whereby the filtering means (4502) is not requited to receive all parameters nccessary for configuration thereof in dependence on all of the conditional access systems.

17. A method according to Claim 16, wherein said parameter is output upon receipt of a command instructing output of said parameter.

18. A method according to Claim 16 or 17, comprising the step of receiving a command notifying updating of the parameters stored in the storage means (4024).

19. A method according to any of Claims 16 to 18, wherein said parameters include an identifier of the conditional access system currently being used by the receiver/decoder (2020).

20. A method according to any of Claims 16 to 19, wherein said parameter output to the filtering means (4502) is associated with said identifier.

21. A method according to any of Claims 16 to 20, wherein commands are received from a configuring application.

22. A method according to Claim 21, wherein an identifier of the conditional access system currently being used by the receiver/decoder is changed in response to a command from the configuring application.

23. A method according to any of Claims 16 to 22, wherein each said parameter comprises at least one byte of a section of a data packet to be received by the receiver/decoder.

24. A method according to any of Claims 16 to 23, wherein each said parameter comprises an identifier of a data packet to be received by the receiver/decoder.

25. A method according to Claim 24, wherein the parameters include an identifier of an entitlement management message (EMM).

26. A method according to Claim 24, wherein the parameters include an identifier of an ECM.

27. A method according to any of Claims 16 to 24, wherein requests are received from a plurality of applications for a plurality of parameters.

## Patentansprüche

1. Vorrichtung (4100) zur Verwendung in einem Empfänger/Decodierer (2020), der mit verschiedenen Zugangsberechtigungssystemen betreibbar ist, wobei der Empfänger/Decodierer eine Einrichtung (4502) zum Filtern von durch den Empfänger/Decodierer (2020) empfangenen Daten, die in Abhängigkeit von einem der Zugangsberechtigungssysteme konfigurierbar ist, und eine Einrichtung (4024) zum Speichern von mit dem Filtern der Daten verbundenen Parametern für alle die verschiedenen Zugangsberechtigungssysteme aufweist, wobei die Vorrichtung (4100) umfaßt:
eine Einrichtung (4101) zum Empfangen eines die Konfiguration der Filtereinrichtung (4502) in Abhängigkeit von einem speziellen Zugangsberechtigungssystem der Zugangsberechtigungssysteme anweisenden Befehls;
eine Einrichtung (4101) zum Wiedergewinnen eines mit dem speziellen Zugangsberechtigungssystem der Zugangsberechtigungssysteme verbundenen Parameters aus der Speichereinrichtung (4024); und
eine Einrichtung (4105) zum Ausgeben des Parameters zu der Filtereinrichtung (4502) zur Verwendung bei der Konfiguration der Filtereinrichtung (4502), wodurch die Filtereinrichtung (4502) nicht alle zur Konfiguration davon in Abhängigkeit von allen den Zugangsberechtigungssystemen notwendigen Parameter empfangen muß.

2. Vorrichtung nach Anspruch 1, die dazu ausgelegt ist, den Parameter bei dem Empfang eines die Ausgabe des Parameters anweisenden Befehls zu der Filtereinrichtung (4502) auszugeben.

3. Vorrichtung nach Anspruch 1 oder 2, mit einer Einrichtung zum Empfangen eines Befehls, der die Vorrichtung von der Aktualisierung der in der Speichereinrichtung gespeicherten Parameter in Kenntnis setzt.

4. Vorrichtung nach einem der vorstehenden Ansprüche, wobei die Parameter eine Identifizierung des derzeit durch den Empfänger/Decodierer (2020) verwendeten Zugangsberechtigungssystems aufweisen.

5. Vorrichtung nach Anspruch 4, wobei der Parameter mit der Identifizierung verbunden ist.

6. Vorrichtung nach einem der vorstehenden Ansprüche, wobei die Vorrichtung dazu in der Lage ist, Befehle von einer Konfigurationsanwendung zu empfangen.

7. Vorrichtung nach Anspruch 6, wobei die Vorrichtung dazu in der Lage ist, eine Identifizierung des derzeit durch den Empfänger/Decodierer verwendeten Zugangsberechtigungssystems im Ansprechen auf einen Befehl von der Konfigurationsanwendung zu ändern.

8. Vorrichtung nach einem der vorstehenden Ansprüche, wobei jeder der Parameter zumindest ein Byte eines Abschnitts eines durch den Empfänger/Decodierer zu empfangenden Datenpakets umfaßt.

9. Vorrichtung nach einem der vorstehenden Ansprüche, wobei jeder der Parameter eine Identifizierung eines durch den Empfänger/Decodierer zu empfangenden Datenpakets umfaßt.

10. Vorrichtung nach Anspruch 9, wobei die Parameter eine Identifizierung einer Berechtigungsverwaltungsnachricht (EMM) aufweisen.

11. Vorrichtung nach Anspruch 9, wobei die Parameter eine Identifizierung einer ECM aufweisen.

12. Vorrichtung nach einem der vorstehenden Ansprüche, die dazu ausgelegt ist, Anforderungen von einer Vielzahl von Anwendungen für eine Vielzahl von Parametern zu empfangen.

13. Empfänger/Decodierer mit einer Vorrichtung (4100) nach einem der vorstehenden Ansprüche, wobei die Filtereinrichtung (4502) dazu ausgelegt ist, zum Filtern von Daten unter der Steuerung der Vorrichtung und der Einrichtung zum Speichern von mit dem Filtern der Daten verbundenen Parametern für alle die verschiedenen Zugangsberechtigungssysteme zu arbeiten.

14. Empfänger/Decodierer nach Anspruch 13, wobei die Filtereinrichtung einen Demultiplexer und ein zum Filtern spezifischer Komponenten von Daten aus durch den Empfänger/Decodierer empfangenen Daten betreibbares Filter (4502) umfaßt.

15. Empfänger/Decodierer nach Anspruch 14, wobei der Parameter das Filter ändert, so daß nur spezifische Komponenten der empfangenen Daten durch den Empfänger/Decodierer heruntergeladen werden.

16. Verfahren zur Konfiguration eines Empfängers/Decodierers zum Zugriff auf Daten, wobei der Empfänger/Decodierer eine Einrichtung (4502) zum Filtern von durch den Empfänger/Decodierer (2020) empfangenen Daten, die in Abhängigkeit von einem Zugangsberechtigungssystem konfigurierbar ist, und eine Einrichtung (4024) zum Speichern von mit dem Filtern der Daten verbundenen Parametern für alle verschiedenen Zugangsberechtigungssysteme aufweist, wobei das Verfahren die Schritte umfaßt:
Empfangen eines die Konfiguration der Filtereinrichtung (4502) in Abhängigkeit von einem speziellen Zugangsberechtigungssystem der Zugangsberechtigungssysteme anweisenden Befehls;
Wiedergewinnen eines mit dem speziellen Zugangsberechtigungssystem der Zugangsberechtigungssysteme verbundenen Parameters aus der Speichereinrichtung (4024); und
Ausgeben des Parameters zu der Filtereinrichtung (4502) zur Verwendung bei der Konfiguration der Filtereinrichtung (4502), wodurch die Filtereinrichtung (4502) nicht alle zur Konfiguration davon in Abhängigkeit von allen den Zugangsberechtigungssystemen notwendigen Parameter empfangen muß.

17. Verfahren nach Anspruch 16, wobei der Parameter bei dem Empfang eines die Ausgabe des Parameters anweisenden Befehls ausgegeben wird.

18. Verfahren nach Anspruch 16 oder 17, mit dem Schritt des Empfangens eines Befehls, der die Aktualisierung der in der Speichereinrichtung (4024) gespeicherten Parameter meldet.

19. Verfahren nach einem der Ansprüche 16 bis 18, wobei die Parameter eine Identifizierung des derzeit durch den Empfänger/Decodierer (2020) verwendeten Zugangsberechtigungssystems aufweisen.

20. Verfahren nach einem der Ansprüche 16 bis 19, wobei der zu der Filtereinrichtung (4502) ausgegebene Parameter mit der Identifizierung verbunden ist.

21. Verfahren nach einem der Ansprüche 16 bis 20, wobei Befehle von einer Konfigurationsanwendung empfangen werden.

22. Verfahren nach Anspruch 21, wobei eine Identifizierung des derzeit durch den Empfänger/Decodierer verwendeten Zugangsberechtigungssystems im Ansprechen auf einen Befehl von der Konfigurationsanwendung geändert wird.

23. Verfahren nach einem der Ansprüche 16 bis 22, wobei jeder der Parameter zumindest ein Byte eines Abschnitts eines durch den Empfänger/Decodierer zu empfangenden Datenpakets umfaßt.

24. Verfahren nach einem der Ansprüche 16 bis 23, wobei jeder der Parameter eine Identifizierung eines durch den Empfänger/Decodierer zu empfangenden Datenpakets umfaßt.

25. Verfahren nach Anspruch 24, wobei die Parameter eine Identifizierung einer Berechtigungsverwaltungsnachricht (EMM) aufweisen.

26. Verfahren nach Anspruch 24, wobei die Parameter eine Identifizierung einer ECM aufweisen.

27. Verfahren nach einem der Ansprüche 16 bis 24, wobei Anforderungen von einer Vielzahl von Anwendungen für eine Vielzahl von Parametern empfangen werden.

## Revendications

1. Dispositif (4100) pour utilisation dans un récepteur/décodeur (2020) exploitable avec différents systèmes d'accès conditionnel, le récepteur/décodeur incluant un moyen (4502) pour filtrer des données reçues par le récepteur/décodeur (2020) et qui est configurable en fonction dudit système d'accès conditionnel, et un moyen (4024) pour enregistrer des paramètres associés au filtrage desdites données pour tous les différents systèmes d'accès conditionnel, le dispositif (4100) comprenant :
un moyen (4101) pour recevoir une commande instruisant la configuration du moyen de filtrage (4502) en fonction d'un système particulier desdits systèmes d'accès conditionnel ;
un moyen (4101) pour récupérer à partir du moyen d'enregistrement (4024) un paramètre associé à un système particulier desdits systèmes d'accès conditionnel ; et
un moyen (4105) pour délivrer ledit paramètre au moyen de filtrage (4502) pour utilisation dans la configuration du moyen de filtrage (4502), de ce fait le moyen de filtrage (4502) n'est pas exigé pour recevoir tous les paramètres nécessaires à la configuration de celui-ci en fonction de tous les systèmes d'accès conditionnel.

2. Dispositif selon la revendication 1, arrangé pour délivrer ledit paramètre au moyen de filtrage (4502) à la réception d'une commande instruisant la délivrance dudit paramètre.

3. Dispositif selon la revendication 1 ou 2, comprenant un moyen pour recevoir une commande notifiant le dispositif de mise à jour des paramètres stockés dans le moyen d'enregistrement.

4. Dispositif selon l'une quelconque des revendications précédentes, dans lequel lesdits paramètres incluent un identificateur du système d'accès conditionnel en cours d'utilisation par le récepteur/décodeur (2020).

5. Dispositif selon la revendication 4, dans lequel ledit paramètre est associé audit identificateur.

6. Dispositif selon l'une quelconque des revendications précédentes, dans lequel le dispositif est en mesure de recevoir des commandes d'une application de configuration.

7. Dispositif selon la revendication 6, dans lequel le dispositif est en mesure de changer un identificateur du système d'accès conditionnel en cours d'utilisation par le récepteur/décodeur en réponse à une commande provenant de l'application de configuration.

8. Dispositif selon l'une quelconque des revendications précédentes, dans lequel chaque dit paramètre comprend au moins un octet d'une section d'un paquet de données devant être reçu par le récepteur/décodeur.

9. Dispositif selon l'une quelconque des revendications précédentes, dans lequel chaque dit paramètre comprend un identificateur d'un paquet de données devant être reçu par le récepteur/décodeur.

10. Dispositif selon la revendication 9, dans lequel les paramètres incluent un identificateur d'un message de gestion des titres d'accès (EMM).

11. Dispositif selon la revendication 9, dans lequel les paramètres incluent un identificateur d'un ECM (message de contrôle des titres d'accès).

12. Dispositif selon l'une quelconque des revendications précédentes, arrangé pour recevoir des requêtes d'une pluralité d'applications pour une pluralité de paramètres.

13. Récepteur/décodeur incluant un dispositif (4100) selon l'une quelconque des revendications précédentes, ledit moyen de filtrage (4502) arrangé pour fonctionner sous la commande du dispositif pour filtrer des données et ledit moyen pour enregistrer des paramètres associés au filtrage desdites données pour tous les différents systèmes d'accès conditionnel.

14. Récepteur/décodeur selon la revendication 13, dans lequel le moyen de filtrage comprend un démultiplexeur et filtre (4502) exploitable pour filtrer des composantes spécifiques de données à partir des données reçues par le récepteur/décodeur.

15. Récepteur/décodeur selon la revendication 14, dans lequel le paramètre change le filtre de sorte que seulement des composantes spécifiques des données reçues sont téléchargées par le récepteur/décodeur.

16. Procédé de configuration d'un récepteur/décodeur pour accéder à des données, le récepteur/décodeur incluant un moyen (4502) pour filtrer des données reçues par le récepteur/décodeur (2020) et qui est configurable en fonction dudit système d'accès conditionnel, et un moyen (4024) pour enregistrer des paramètres associés au filtrage desdites données pour tous les différents systèmes d'accès conditionnel, le procédé comprenant les étapes qui consistent :
à recevoir une commande instruisant la configuration du moyen de filtrage (4502) en fonction d'un système particulier desdits systèmes d'accès conditionnel ;
à récupérer à partir du moyen d'enregistrement (4024) un paramètre associé audit système particulier des systèmes d'accès conditionnel ; et
à délivrer ledit paramètre au moyen de filtrage (4502) pour utilisation dans la configuration du moyen de filtrage (4502), de ce fait le moyen de filtrage (4502) n'est pas exigé pour recevoir tous les paramètres nécessaires à la configuration de celui-ci en fonction de tous les systèmes d'accès conditionnel.

17. Procédé selon la revendication 16, dans lequel ledit paramètre est délivré à la réception d'une commande instruisant la délivrance dudit paramètre.

18. Procédé selon la revendication 16 ou 17, comprenant l'étape qui consiste à recevoir une commande notifiant la mise à jour des paramètres stockés dans le moyen d'enregistrement (4024).

19. Procédé selon l'une quelconque des revendications 16 à 18, dans lequel lesdits paramètres incluent un identificateur du système d'accès conditionnel en cours d'utilisation par le récepteur/décodeur (2020).

20. Procédé selon l'une quelconque des revendications 16 à 19, dans lequel ledit paramètre délivré au moyen de filtrage (4502) est associé audit identificateur.

21. Procédé selon l'une quelconque des revendications 16 à 20, dans lequel des commandes sont reçues d'une application de configuration.

22. Procédé selon la revendication 21, dans lequel un identificateur du système d'accès conditionnel en cours d'utilisation par le récepteur/décodeur est changé en réponse à une commande provenant de l'application de configuration.

23. Procédé selon l'une quelconque des revendications 16 à 22, dans lequel chaque dit paramètre comprend au moins un octet d'une section d'un paquet de données devant être reçu par le récepteur/décodeur.

24. Procédé selon l'une quelconque des revendications 16 à 23, dans lequel chaque dit paramètre comprend un identificateur d'un paquet de données devant être reçu par le récepteur/décodeur.

25. Procédé selon la revendication 24, dans lequel les paramètres incluent un identificateur d'un message de gestion des titres d'accès (EMM).

26. Procédé selon la revendication 24, dans lequel les paramètres incluent un identificateur d'un ECM (message de contrôle des titres d'accès).

27. Procédé selon l'une quelconque des revendications 16 à 24, dans lequel des requêtes sont reçues d'une pluralité d'applications pour une pluralité de paramètres.
